# EUROPEAN PATENT SPECIFICATION

(11) **EP 3 617 558 B1**
(45) Date of publication and mention of the grant of the patent: **12.05.2021**
(21) Application number: 19193954.5
(22) Date of filing: 28.08.2019
(51) Int. Cl.: F16H 59/10, F16H 59/02

(54) **GEARSHIFT LEVER DEVICE**
SCHALTHEBELVORRICHTUNG
DISPOSITIF DE LEVIER DE VITESSES

(30) Priority: 31.08.2018 JP 2018162600
(43) Date of publication of application: 04.03.2020
(73) Proprietor: Fuji Kiko Co., Ltd., Shizuoka 431-0431 (JP)
(72) Inventor: KUBOTA, Katsushi, Kosai-shi, Shizuoka 431-0431 (JP)
(74) Representative: Grünecker Patent- und Rechtsanwälte PartG mbB

(56) References cited:
- JP-A- 2005 119 440
- US-A1- 2009 217 781
- US-A1- 2010 307 277

## Description

### Technical Field

The present invention relates to a gearshift lever device of an automatic transmission.

### Background Art

There has been known an automatic transmission of an automobile including a gearshift lever device that allows a driver to switch the driving mode to a manual mode while keeping a D (drive) range in an auto mode and to manually perform shift-up and shift-down (see Japanese Patent Application Publication No. H9-263151). The gearshift lever device of Japanese Patent Application Publication No. H9-263151 uses a joint to allow a gearshift lever to be moved in a front-rear direction (shift direction) in the auto mode and the manual mode and to be moved in a right-left direction (select direction) for switching between the auto mode and the manual mode. The joint includes a first tube body along the right-left direction (select direction) and a second tube body along the front-rear direction (shift direction).

The gearshift lever is moved in the front-rear direction (shift direction) about an axial center of the first tube body and is moved in the right-left direction (select direction) about an axial center of the second tube body. A compression rod inserted in the tubular gearshift lever is pushed upward by a spring. The spring is supported with its lower end engaged with a protrusion portion formed on an upper surface of the second tube body. With an operation button formed at an upper portion of the gearshift lever pressed, the compression rod is moved downward against the spring to enable operations of the gearshift lever in the auto mode. A gearshift lever device according to the preamble of independent claim 1 is disclosed in Japanese Patent Application Publication No. 2005-119440.

### Summary

As a configuration for moving the gearshift lever in the right-left direction and the front-rear direction, there is one that allows the gearshift lever to be moved about a spherical portion formed on a lower portion of the gearshift lever without using the joint including the first and second tube bodies. In this case, since the spherical portion is formed integrally with the gearshift lever, it is difficult to employ the configuration of Japanese Patent Application Publication No. H9-263151 as a configuration for supporting the lower end of the spring.

In view of this, the object of the present invention is to implement a configuration for moving a gearshift lever in a right-left direction and a front-rear direction by moving the gearshift lever about a spherical portion on a lower portion of the gearshift lever, which is also capable of supporting a lower end of an elastic body pushing a compression rod upward A gearshift lever device according to the present invention is defined in independent claim 1. Preferred embodiments are set out in the dependent claims.

A gearshift lever device according to an aspect of the present invention allows a gearshift lever to be operated in both an auto mode and a manual mode. The gearshift lever device includes a gearshift lever, a spherical portion that is formed in a lower portion of the gearshift lever and supports the gearshift lever while allowing the gearshift lever to be moved in a front-rear direction in the auto mode or the manual mode and supports the gearshift lever while allowing the gearshift lever to be moved in a right-left direction to switch between the auto mode or the manual mode; a compression rod that is arranged in the gearshift lever movably in a vehicle top-down direction and that, when an operation portion formed on the gearshift lever is operated in the auto mode, is moved downward in the gearshift lever to enable operations of the gearshift lever in the front-rear direction; an elastic body that is arranged at a lower portion in the gearshift lever and pushes the compression rod upward; and a support member that is attached to the gearshift lever and supports a lower portion of the elastic body. The support member includes an insertion portion that is to be inserted from an opening in a lower end of the gearshift lever and a lock portion that is to be locked in a lock hole in the gearshift lever with the insertion portion inserted in the gearshift lever.

According to a gearshift lever device of an aspect of the present invention, it is possible to implement a configuration for moving a gearshift lever about a spherical portion on a lower portion of the gearshift lever to move the gearshift lever in a right-left direction and a front-rear direction, which still can support a lower end of an elastic body pushing a compression rod.

### Brief Description of Drawings

Fig. 1 is a perspective view that illustrates inside of a housing of a gearshift lever device according to an embodiment of the present invention.
Fig. 2 is an exploded perspective view of the gearshift lever device in Fig. 1.
Fig. 3 is a cross-sectional view taken along a position of an axial center of a gearshift lever in the gearshift lever device in Fig. 1.
Fig. 4 is a perspective view of a stopper attached on a lower end opening of the gearshift lever in the gearshift lever device in Fig. 1.
Fig. 5A is a front view of the stopper in Fig. 4.
Fig. 5B is a side view of Fig. 5A.
Fig. 5C is a plan view of Fig. 5B.
Fig. 5D is a cross-sectional view taken along the A-A line in Fig. 5B.

### Description of Embodiments

An embodiment of the present invention is described below in detail with reference to the drawings.

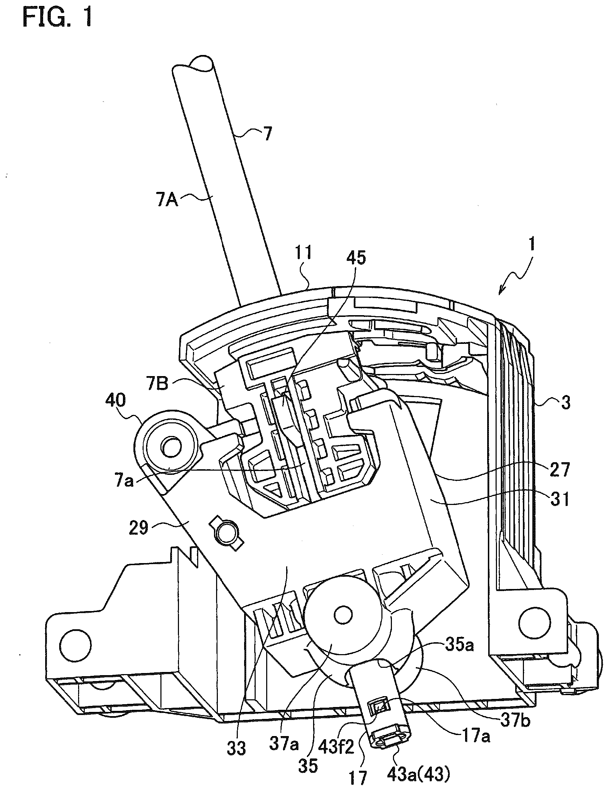

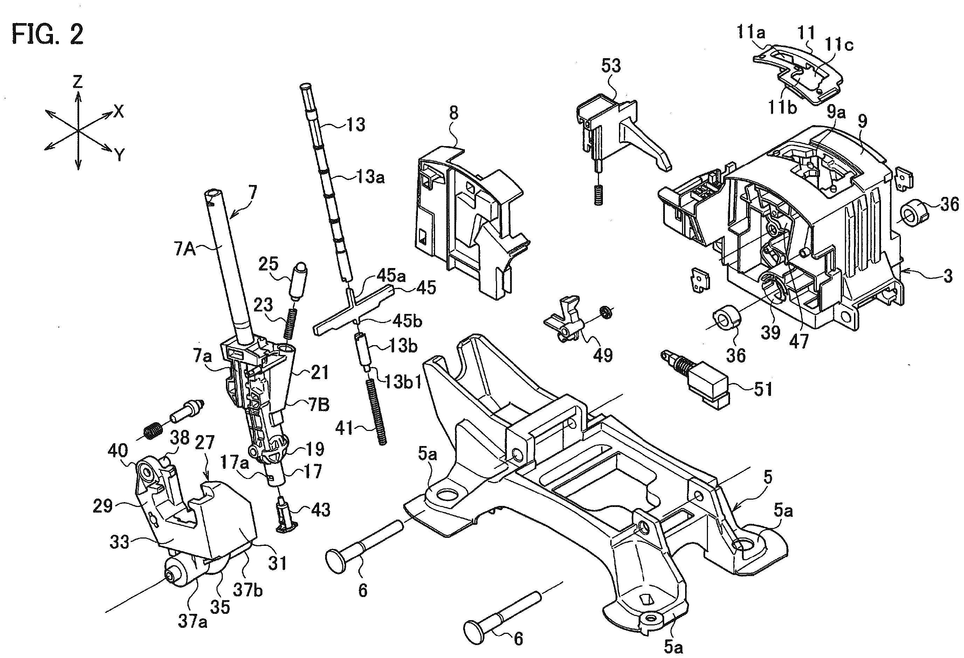

Fig. 1 illustrates an internal configuration of a gearshift lever device 1 used in a vehicle (an automobile). In the following descriptions, "front-rear direction" and "right-left direction" respectively correspond to a front-rear direction and a right-left direction of the vehicle in which the gearshift lever device 1 is mounted. In Fig. 2, an arrow X indicates the right-left direction (select direction), an arrow Y indicates the front-rear direction (shift direction), and an arrow Z indicates a top-down direction (vehicle top-down direction). In the gearshift lever device 1, a housing 3 is assembled on a base 5 illustrated in Fig. 2 with fix pins 6. The base 5 is fixed on an unillustrated vehicle body using mounting portions 5a. A lower portion of a gearshift lever 7 is inserted to the housing 3. A cover 8 is put on one opening in the right-left direction X of the housing 3.

As illustrated in Fig. 2, an upper surface portion 9 of the housing 3 has a curved concave shape, which is an arc shape in the front-rear direction Y. A cover panel 11 is put on the upper surface portion 9. An auto mode shift path 11a for automatic transmission operation and a manual mode shift path 11b for manual transmission operation are formed on the cover panel 11. AD (drive) range of the auto mode shift path 11a and a neutral position of the manual mode shift path 11b are connected through a select operation shift path 11c.

The auto mode shift path 11a is long in the front-rear direction Y, and the manual mode shift path 11b is positioned around a rear portion of the auto mode shift path 11a and has a shorter length in the front-rear direction Y than the auto mode shift path 11a. An opening 9a corresponding to the auto mode shift path 11a, the manual mode shift path 11b, and the select operation shift path 11c is formed in the upper surface portion 9 of the housing 3.

The gearshift lever 7 includes a lever main body 7A, which is a cylinder and is hollow along the entire length in an axial direction, and a resin molded body 7B, which is molded of resin integrally on a lower outer circumference of the lever main body 7A. A compression rod 13 is inserted in the lever main body 7A movably in the axial direction. In the resin molded body 7B, a cylindrical portion 17 is formed on a lower end portion, and a spherical portion 19 is formed next to an upper portion of the cylindrical portion 17.

In the resin molded body 7B, a tube portion 21 is obliquely formed on a side portion above the spherical portion 19. A check spring 23 and a check pin 25 that is pushed in an upward projecting direction by the check spring 23 are housed in the tube portion 21. The check pin 25 is engaged with an unillustrated check groove formed in the housing 3.

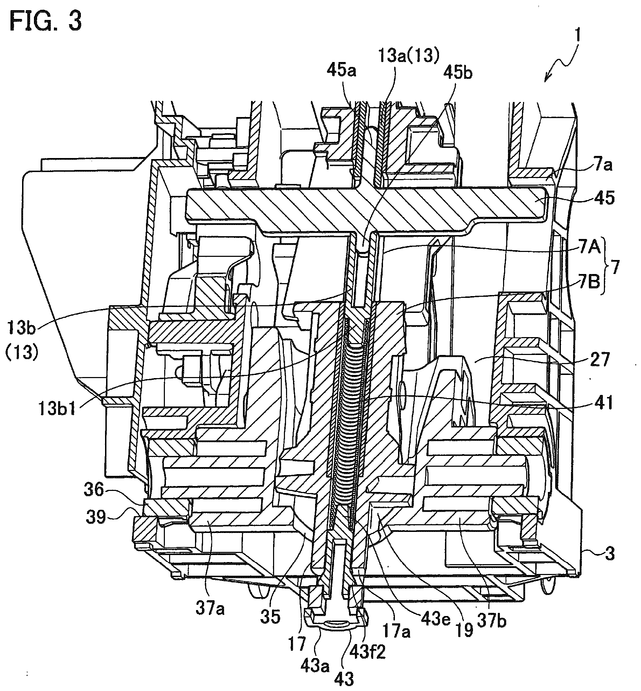

The resin molded body 7B is supported by a select block 27. The select block 27 includes a front wall portion 29, a rear wall portion 31, and a bottom wall portion 33. As illustrated in Fig. 3, a spherical reception portion 35 that receives the spherical portion 19 is formed on the bottom wall portion 33. A cylindrical portion 17 is inserted to penetrate through a through hole 35a formed in the spherical reception portion 35. The through hole 35a is formed to be greater than an outer diameter of the cylindrical portion 17 so as to allow the cylindrical portion 17 to move in the right-left direction when the gearshift lever 7 is moved in the select operation shift path 11c in the right-left direction.

A lower end of the lever main body 7A reaches a center position of the spherical portion 19. A cylindrical space in the cylindrical portion 17 of the resin molded body 7B is continuously formed in the spherical portion 19, and the space is continued to the internal space of the lever main body 7A. With the spherical portion 19 sliding and rotating in the front-rear and right-left directions relative to the spherical reception portion 35, the gearshift lever 7 is moved in the front-rear direction (shift direction) Y and the right-left direction (select direction) X.

Shaft portions 37a, 37b extending in the right-left direction X are formed in right and left sides of the spherical reception portion 35. As illustrated in Fig. 3, in the select block 27, the shaft portions 37a, 37b are rotatably supported by a shaft hole 39 of the housing 3 with bushes 36. This allows the select block 27 to be shifted in the front-rear direction Y about the shaft portions 37a, 37b.

As described above, the gearshift lever 7 is moved in the right-left direction (select direction) X about the spherical portion 19. When the gearshift lever 7 is moved from the auto mode shift path 11a in the left direction to the manual mode shift path 11b, the fitting of the resin molded body 7B and the select block 27 is released. On the other hand, when the gearshift lever 7 is moved from the manual mode shift path 11b in the right direction to the auto mode shift path 11a, the resin molded body 7B is fitted to the select block 27. The fitting of the resin molded body 7B and the select block 27 is made by inserting an upper portion of the resin molded body 7B to a space between the front wall portion 29 and the rear wall portion 31 of the select block 27.

With the gearshift lever 7 moved in the front-rear direction while the resin molded body 7B is fitted to the select block 27, the select block 27 is moved together in the front-rear direction about the shaft portions 37a, 37b. This allows shift change in an auto mode. On an upper end of the front wall portion 29 of the select block 27, a cable coupling portion 40 to which one end of an unillustrated cable is to be coupled using a cable pin 38 is formed. The other end of the cable is coupled to an unillustrated automatic transmission.

An unillustrated operation nob is formed on an upper portion of the gearshift lever 7, and the compression rod 13 is moved downward by pressing an operation button formed on the operation knob. The compression rod 13 is divided into a rod upper portion 13a and a rod lower portion 13b that is shorter than the rod upper portion 13a, and a position pin 45 extending in the right-left direction X is arranged between the rod upper portion 13a and the rod lower portion 13b. The position pin 45 includes insertion protrusions 45a, 45b formed on the top and the bottom of its middle part in the right-left direction, and the insertion protrusions 45a, 45b are respectively inserted to insides of the rod upper portion 13a and the rod lower portion 13b.

A through hole 7a that is long in the top-down direction Z is formed in a part corresponding to the resin molded body 7B of the gearshift lever 7. The through hole 7a penetrates the lever main body 7A and the resin molded body 7B at a position above the spherical portion 19. The position pin 45 is inserted to the through hole 7a movably in the top-down direction Z. The position pin 45 projects outside the resin molded body 7B from the through hole 7a, and the projecting parts around tip ends are inserted to a position gate 47 of the housing 3. The position pin 45 is moved inside the position gate 47 by operation of the gearshift lever 7.

In the gearshift lever 7, a coil spring 41 as an elastic body is housed below the rod lower portion 13b of the compression rod 13. The coil spring 41 pushes the compression rod 13 upward. During the pushing, a protrusion 13b1 projecting downward from a lower end of the rod lower portion 13b is inserted to an upper portion of the coil spring 41. A stopper 43 as a support member attached on a lower end of the gearshift lever 7 prevents the coil spring 41 from falling out.

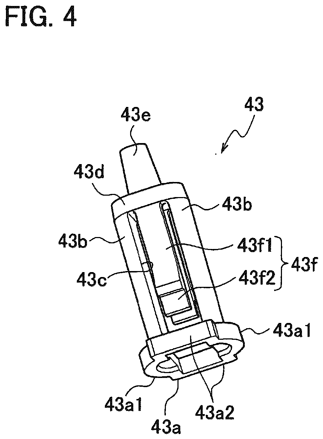

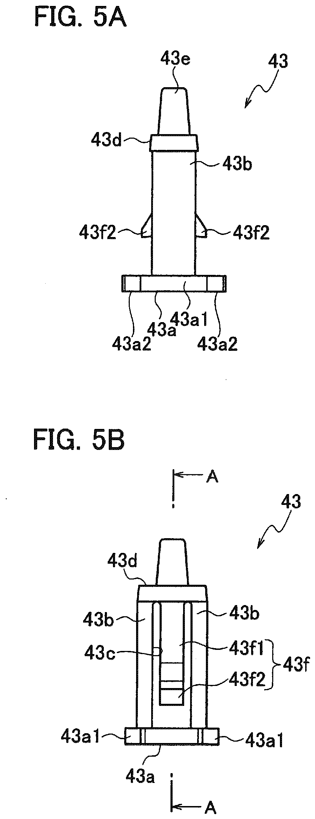

As illustrated in Figs. 4 and 5A to 5D, the stopper 43 includes a substantially ring shaped base portion 43a. The base portion 43a includes a pair of arc portions 43a1 opposed to each other and a pair of rectangular portions 43a2 opposed to each other in positions spaced 90 degrees apart in a circumferential direction from the positions of the arc portions 43a1. A pair of leg portions 43b are formed to stand upright from inner circumferential sides of the corresponding arc portions 43a1.

As illustrated in Figs. 1 and 3, an upper end surface of the base portion 43a is in contact with a lower end of the cylindrical portion 17 of the resin molded body 7B. Specifically, since a total outer diameter of the pair of arc portions 43a1 is substantially equal to an outer diameter of the cylindrical portion 17, a substantially entire area of top surfaces of the arc portions 43a1 is in contact with a lower end surface of the cylindrical portion 17. The pair of leg portions 43b are positioned to oppose to each other. Each leg portion 43b forms a part (substantially 1/4) of a cylindrical member in a circumferential direction. Consequently, openings 43c are respectively formed between each of the pair of leg portions 43b in the circumferential direction.

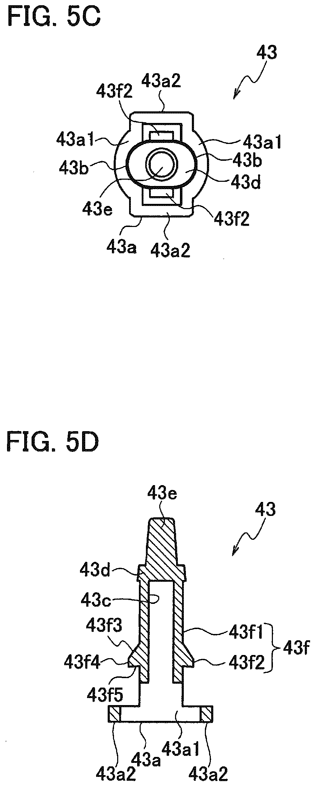

Upper ends of the pair of leg portions 43b are connected by a flat plate portion 43d. As illustrated in Fig. 5C, the flat plate portion 43d is substantially oval in plan view. A protrusion portion 43e projecting upward is formed on a top surface of the flat plate portion 43d. A cross section of the protrusion portion 43e is circle, and a diameter of the circle of the protrusion portion 43e in a tip end side (upper end side) is smaller than that in a base end side (lower end side).

In the stopper 43, a pair of lock portions 43f are formed in the openings 43c between the pair of leg portions 43b. Each lock portion 43f includes an arm portion 43fl including an upper portion connected to the flat plate portion 43d and a tab portion 43f2 formed on a lower portion of the arm portions 43fl. The arm portion 43f1 is long in the top-down direction Z and is elastically deformed such that the tab portion 43f2 on the lower portion is moved between inside and outside of the opening 43c while being supported at the upper portion. The tab portions 43f2 are positioned above the base portion 43a and are away from the base portion 43a.

Lock holes 17a into which the tab portions 43f2 enter are formed in the cylindrical portion 17 of the resin molded body 7B. Thus, with the stopper 43 attached on the cylindrical portion 17 as illustrated in Fig. 1, the tab portions 43f2 enter the lock holes 17a, and the tab portions 43f2 prevent the stopper 43 from falling out from the cylindrical portion 17. At that time, outer circumferential surfaces of the leg portions 43b are substantially in contact with an inner circumferential surface of the cylindrical portion 17.

When the stopper 43 is inserted to the cylindrical portion 17, tip ends of the tab portions 43f2 press the inner circumferential surface of the cylindrical portion 17, and thus the pair of arm portions 43f1 are elastically deformed in a direction in which they come close to each other. Thereafter, once the tab portions 43f2 are locked in the lock holes 17a, the pair of arm portions 43f1 is restored from the elastically deformed state to the original form.

While the stopper 43 is attached on the cylindrical portion 17, the protrusion portion 43e is inserted in the coil spring 41 as illustrated in Fig. 3. In this state, a lower end of the coil spring 41 is in contact with the top surface of the flat plate portion 43d. In other words, the flat plate portion 43d serves as a spring receiver of the coil spring 41.

As illustrated in Fig. 5D, each tab portion 43f2 includes an upper inclined surface 43f3, an outer circumferential cylindrical surface 43f4, and a lower end surface 43f5. The upper inclined surface 43f3 is inclined such that a lower end is positioned farther to the outside from a central axis in the top-down direction Z than an upper end. In the outer circumferential cylindrical surface 43f4, an upper end is continued to the upper inclined surface 43f3, and a lower end is continued to the lower end surface 43f5. The lower end surface 43f5 is inclined such that an outer circumference side end portion is located below an inner circumference side end portion. Since the lower end surface 43f5 is inclined, tip end sides of the tab portions 43f2 are elastically deformed upward easily when the stopper 43 is pushed downward by the coil spring 41 and the tab portions 43f2 are pressed on edges of the lock holes 17a.

Fig. 2 illustrates constituents such as a shift-lock lever 49, a solenoid 51 that releases the shift-lock lever 49, and a forcible release lever 53 that releases shift-lock by forcibly turning the shift-lock lever 49. The shift-lock lever 49 is for preventing the gearshift lever 7 from moving from a parking position when parking the vehicle.

Next, operations of the gearshift lever device 1 are described.

The solenoid 51 is activated when a brake pedal is stepped down at the start-up of an engine and the gearshift lever 7 is in a P (parking) range of the auto mode shift path 11a, and then the shift-lock of the shift-lock lever 49 is released. When the operation button on the upper portion of the gearshift lever 7 is pressed in this state, the compression rod 13 is moved downward with the position pin 45. This allows the position pin 45 to move rearward in the position gate 47 and allows the gearshift lever 7 to be moved in the front-rear direction in the auto mode shift path 11a. While the compression rod 13 is moving downward, the coil spring 41 is compressed. Once stopping the operation of pressing the operation button, the compression rod 13 is pushed by the coil spring 41 and moved upward.

With the gearshift lever 7 moved in the front-rear direction in the auto mode shift path 11a, it is possible to select each of ranges in the auto mode. When the gearshift lever 7 in the D (drive) mode of the auto mode shift path 11a is moved to the manual mode shift path 11b by way of the select operation shift path 11c, the driving mode is shifted to the manual mode. In the manual mode, it is possible to manually perform shift-up and shift-down by moving the gearshift lever 7 in the front-rear direction.

When the gearshift lever 7 is moved in the front-rear direction in the auto mode shift path 11a, the gearshift lever 7 is shifted in the front-rear direction about the shaft portions 37a, 37b with the select block 27. When the gearshift lever 7 is moved in the front-rear direction in the manual mode shift path 11b and moved in the right-left direction in the select operation shift path 11c, the spherical portion 19 slides and rotates relative to the spherical reception portion 35 of the select block 27.

Next, operations and effects are described.

The gearshift lever device 1 of this embodiment allows the gearshift lever 7 to be operated in both the auto mode and manual mode. The gearshift lever device 1 includes the spherical portion 19 that is formed in the lower portion of the gearshift lever 7 and supports the gearshift lever 7 while allowing the gearshift lever 7 to be moved in the front-rear direction Y in the auto mode or the manual mode and supports the gearshift lever 7 while allowing the gearshift lever 7 to be moved in the right-left direction X to switch between the auto mode or the manual mode. The gearshift lever device 1 includes the compression rod 13 that is arranged in the gearshift lever 7 movably in the axial direction and that, when the operation button as the operation portion formed on the gearshift lever 7 is operated in the auto mode, is moved downward in the gearshift lever 7 to enable operations of the gearshift lever 7 in the front-rear direction Y.

The gearshift lever device 1 includes the coil spring 41 that is arranged at the lower portion in the gearshift lever 7 and pushes the compression rod 13 upward and the stopper 43 that is attached to the gearshift lever 7 and supports the lower portion of the coil spring 41. The stopper 43 includes insertion portions (leg portions 43b, protrusion portions 43e) that are inserted from the opening at the lower end of the gearshift lever 7 and the lock portions 43f that are locked in the lock holes 17a in the gearshift lever 7 with the insertion portions inserted in the gearshift lever 7.

In the case of this embodiment, the configuration for moving the gearshift lever 7 in the right-left direction (select direction) X and the front-rear direction (shift direction) Y is implemented by moving the gearshift lever 7 about the spherical portion 19 formed in the lower portion of the gearshift lever 7. Even in such a gearshift lever device 1, the lower end of the coil spring 41 pushing the compression rod 13 upward can be supported by the stopper 43. In this state, in the stopper 43, the insertion portions, or specifically the leg portions 43b, are inserted in the gearshift lever 7, and the outer circumferential surfaces of the leg portions 43b are substantially in contact with the inner circumferential surface of the gearshift lever 7 (cylindrical portion 17); thus, the parts are assembled in a stable manner.

In this embodiment, the elastic body pushing the compression rod 13 upward is formed of the coil spring 41, and the protrusion portion 43e on the tip end side of the lock portion 43f is inserted in the coil spring 41. In this case, when the coil spring 41 is compressed or extended, the protrusion portion 43e can suppress the deformation of the coil spring 41 curved in a direction crossing the compression or extension direction.

The lock portions 43f of this embodiment include the tab portions 43f2, a trailing end side of the tab portion in the insertion direction of the insertion portions being pressed on the edges of the lock holes 17a while the tab portions 43f2 are locked in the lock holes 17a. The lower end surface 43f5 of each tab portion 43f2, which is a portion opposed to the edge, is inclined such that the tip end side of the tab portion 43f2 is positioned behind the base end side of the tab portion 43f2 in the right-left direction of the vehicle (X).

Consequently, the tip end sides of the tab portions 43f2 are easily elastically deformed upward when the stopper 43 is pushed downward by the coil spring 41 and the lower end surfaces 43f5 are pressed on the edges of the lock holes 17a. The upward elastic deformation of the tab portions 43f2 makes it possible to suppress a backlash generated when the stopper 43 is attached on the cylindrical portion 17, and thus the parts can be assembled in the stable manner.

Although the embodiment of the present invention is described as above, the embodiment is merely an example described for facilitating understanding of the present invention, and the present invention is not limited to the embodiment. The technical scope of the present invention is defined in the claims.

For example, in the above-described embodiment, the coil spring 41 is used as the elastic body that pushes the compression rod 13 upward. However, as long as the compression rod 13 can be moved downward by a predetermined amount when the operation button is pressed, it is not limited to the coil spring 41. The protrusion portions 43e are not necessarily required as long as the configuration allows the lower end of the coil spring 41 to be in contact with the flat plate portion 43d.

## Claims

1. A gearshift lever device (1) that allows a gearshift lever (7) to be operated in both an auto mode and a manual mode, comprising: the gearshift lever (7); a spherical portion (19) that is formed in a lower portion of the gearshift lever (7) and supports the gearshift lever (7) while allowing the gearshift lever (7) to be moved in a front-rear direction in the auto mode or the manual mode and supports the gearshift lever (7) while allowing the gearshift lever (7) to be moved in a right-left direction to switch between the auto mode or the manual mode;
a compression rod (13) that is arranged in the gearshift lever (7) movably in a vehicle top-down direction and that, when an operation portion formed on the gearshift lever (7) is operated in the auto mode, is moved downward in the gearshift lever (7) to enable operations of the gearshift lever (7) in the front-rear direction;
an elastic body that is arranged at a lower portion in the gearshift lever (7) and pushes the compression rod (13) upward; and
a support member (43) that is attached to the gearshift lever (7) and supports a lower portion of the elastic body, wherein
the support member (43) includes an insertion portion (43b, 43e) that is inserted from an opening at a
lower end of the gearshift lever (7),
**characterized in that**
the support member (43) further includes a lock portion (43f) that is locked in a lock hole (17a)
in the gearshift lever (7) with the insertion portion (43b, 43e) inserted in the gearshift lever (7)

2. The gearshift lever device (1) according to claim 1, wherein
the elastic body is formed of a coil spring (41), and the insertion portion located above the lock portion (43f) is inserted in the coil spring (41).

3. The gearshift lever device (1) according to claim 2, wherein
the lock portion (43f) includes a tab portion (43f2), a trailing end side of the tab portion (43f2) in the insertion direction of the insertion portions being pressed on an edge of the lock hole (17a) while the tab portion (43f2) is locked in the lock hole (17a), the lower end surface (43f5) of the tab portion (43f2), which is a portion opposed to the edge of the lock hole (17a), is inclined such that a tip end side of the tab portion (43f2) is positioned behind a base end side of the tab portion (43f2) in the right-left direction of the vehicle (X).

## Patentansprüche

1. Schalthebelvorrichtung (1), die das Betätigen eines Schalthebels (7) in einem automatischen Modus und einem manuellen Modus ermöglicht, umfassend:
den Schalthebel (7);
einen kugelförmigen Abschnitt (19), der in einem unteren Abschnitt des Schalthebels (7) ausgebildet ist und den Schalthebel (7) stützt, während das Bewegen des Schalthebels (7) in einer Richtung von vorne nach hinten im automatischen Modus oder manuellen Modus ermöglicht wird, und den Schalthebel (7) stützt, während das Bewegen des Schalthebels (7) in einer Richtung von rechts nach links zum Schalten zwischen dem automatischen Modus und dem manuellen Modus ermöglicht wird;
eine Druckstange (13), die im Schalthebel (7) in einer Fahrzeugrichtung von oben nach unten beweglich ist und die, wenn ein am Schalthebel (7) ausgebildeter Betätigungsabschnitt im automatischen Modus betätigt wird, im Schalthebel (7) nach unten bewegt wird, um Betätigungen des Schalthebels (7) in der Richtung von vorne nach hinten zu ermöglichen;
einen elastischen Körper, der an einem unteren Abschnitt im Schalthebel (7) angeordnet ist und die Druckstange (13) nach oben drückt; und
ein Stützelement (43), das am Schalthebel (7) befestigt ist und einen unteren Abschnitt des elastischen Körpers stützt, wobei
das Stützelement (43) einen Einführabschnitt (43b, 43e) umfasst, der von einer Öffnung an einem unteren Ende des Schalthebels (7) eingeführt ist,
**dadurch gekennzeichnet, dass**
das Stützelement (43) ferner einen Verriegelungsabschnitt (43f) umfasst, der in einem Verriegelungsloch (17a) im Schalthebel (7) mit dem Einführabschnitt (43b, 43e) in den Schalthebel (7) eingeführt verriegelt ist.

2. Schalthebelvorrichtung (1) nach Anspruch 1, wobei
der elastische Körper aus einer Schraubenfeder (41) gebildet ist und der oberhalb des Verriegelungsabschnitts (43f) angeordnete Einführabschnitt in der Schraubenfeder (41) eingeführt ist.

3. Schalthebelvorrichtung (1) nach Anspruch 2, wobei
der Verriegelungsabschnitt (43f) einen Vorsprungsabschnitt (43f2) umfasst, wobei eine hintere Endseite des Vorsprungsabschnitts (43f2) in der Einführrichtung der Einführabschnitte an einen Rand des Verriegelungslochs (17a) gedrückt wird, während der Vorsprungsabschnitt (43f2) im Verriegelungsloch (17a) verriegelt ist,
die untere Endfläche (43f5) des Vorsprungsabschnitts (43f2), die ein Abschnitt gegenüber dem Rand des Verriegelungslochs (17a) ist, so geneigt ist, dass eine Spitzenendseite des Vorsprungsabschnitts (43f2) hinter einer Basisendseite des Vorsprungsabschnitts (43f2) in der Richtung von rechts nach links des Fahrzeugs (X) angeordnet ist.

## Revendications

1. Dispositif de levier de changement de vitesse (1) qui permet l'actionnement d'un levier de changement de vitesse (7) en mode automatique et en mode manuel, comprenant :
le levier de changement de vitesse (7) ;
une portion sphérique (19) qui est formée dans une portion inférieure du levier de changement de vitesse (7) et prend en charge le levier de changement de vitesse (7) tout en permettant au levier de changement de vitesse (7) d'être déplacé en direction avant-arrière en mode automatique ou en mode manuel et prend en charge le levier de changement de vitesse (7) tout en permettant au levier de changement de vitesse (7) d'être déplacé en direction gauche-droite pour commuter entre le mode automatique et le mode manuel ;
une tige de compression (13) qui est agencée dans le levier de changement de vitesse (7) de façon mobile en direction haut-bas d'un véhicule, et qui, quand une portion d'actionnement formée sur le levier de changement de vitesse (7) est actionnée en mode automatique, est déplacée vers le bas dans le levier de changement de vitesse (7) pour permettre des actionnements du levier de changement de vitesse (7) en direction avant-arrière ;
un corps élastique qui est agencé sur une portion inférieure dans le levier de changement de vitesse (7) et pousse la tige de compression (13) vers le haut ; et
un élément de support (43) qui est attaché au levier de changement de vitesse (7) et supporte une portion inférieure du corps élastique, dans lequel
l'élément de support (43) comprend une portion d'insertion (43b, 43e) qui est insérée par une ouverture à une extrémité inférieure du levier de changement de vitesse (7),
**caractérisé**
**en ce que** l'élément de support (43) comprend en outre une portion de verrouillage (43f) qui est verrouillée dans un trou de verrouillage (17a) dans le levier de changement de vitesse (7) avec la portion d'insertion (43b, 43e) insérée dans le levier de changement de vitesse (7).

2. Dispositif de levier de changement de vitesse (1) selon la revendication 1, dans lequel
le corps élastique est constitué d'un ressort hélicoïdal (41), et la portion d'insertion située au-dessus de la portion de verrouillage (43f) est insérée dans le ressort hélicoïdal (41).

3. Dispositif de levier de changement de vitesse (1) selon la revendication 2, dans lequel
la portion de verrouillage (43f) comprend une portion d'ergot (43f2), un côté extrémité arrière de la portion d'ergot (43f2) en direction d'insertion des portions d'insertion étant poussé sur un bord du trou de verrouillage (17a) alors que la portion d'ergot (43f2) est verrouillée dans le trou de verrouillage (17a),
la surface d'extrémité inférieure (43f5) de la portion d'ergot (43f2), qui est une portion opposée au bord du trou de verrouillage (17a), est inclinée de telle sorte qu'un côté extrémité de pointe de la portion d'ergot (43f2) est positionné derrière un côté extrémité de base de la portion d'ergot (43f2) en direction gauche-droite du véhicule (X).
